# DEMANDE DE BREVET EUROPEEN

(11) **EP 2 837 749 A1**
(43) Date de publication de la demande: **18.02.2015**
(21) Numéro de dépôt: 14180068.0
(22) Date de dépôt: 06.08.2014
(51) Int. Cl.: E04B 1/14, E04C 2/296, E04B 1/61

(54) **Procédé de fabrication de paroi composite**

(30) Priorité: 13.08.2013 FR 1357970
(71) Demandeur: Faber, Jean-Marc, 38240 Meylan (FR)
(72) Inventeur: Faber, Jean-Marc, 38240 Meylan (FR)
(74) Mandataire: Chevalier, Renaud Philippe

(57) **Abrégé**

L'invention concerne un procédé de fabrication d'une paroi composite (2) pour habitation caractérisé en ce qu'il comprend les étapes suivantes :
- une étape de positionnement d'au moins deux panneaux de parement (3) sensiblement parallèlement l'un à l'autre, de sorte qu'un espace soit créé entre lesdits au moins deux panneaux de parement (3),
- une étape de surmoulage sous presse d'un noyau de liaison (4) en polyuréthane polymérisé conçu pour rigidifier la paroi composite (2) et lier les panneaux de parement (3) entre eux, ledit noyau de liaison (4) étant surmoulé dans l'espace créé par les deux panneaux de parement (3).

## Description

L'invention concerne le domaine des parois ou murs pour habitation à faible coût de construction, et plus particulièrement le procédé de fabrication de ces parois.

Dans le domaine des habitations à faible coût de construction, les habitations en ossature bois sont souvent privilégiées de par leur dimension écologique conférée par les matériaux de construction utilisés. En effet, ces habitations sont réalisées en matériaux recyclables et isolants, permettant une économie d'énergie et ayant un impact moindre sur l'environnement.

Cependant, ces habitations en ossature bois nécessitent de nombreux composants, notamment pour la construction des murs. En effet, un mur de ce type d'habitation est classiquement composé d'une ossature bois, à l'intérieur de laquelle sont agencés un isolant, un pare-vapeur et des tasseaux de bois et sur laquelle sont disposés des panneaux intérieur et extérieur et du bardage. En outre, les murs nécessitent l'aménagement de lames d'air ventilé pour accroître l'isolation.

De plus, à cause du nombre important de composants à assembler, ces habitations sont généralement complexes et longues à monter et nécessitent une main d'oeuvre spécialisée.

Depuis quelques années, s'est développé un autre type d'habitation à faible coût qui est réalisé avec des murs composites.

On connait de la demande de brevet EP1602789 A1, un système de panneau mural multicouche pour habitation. Ce système de panneau comprend au moins une couche de polystyrène et au moins deux couches de ciment ou de plâtre dans lesquelles est intégrée de la fibre de verre. Les couches sont réalisées les unes indépendamment des autres et sont ensuite assemblées pour former le système de panneau mural multicouche.

On connait également de la demande de brevet FR2774711 A1, un système de construction de panneaux d'assemblage pour des constructions modulaires. Les panneaux de ce système de construction comprennent un cadre périphérique formé d'un profilé, deux plaques de revêtement réalisées en un matériau inerte et isolant et une âme en mousse polyuréthane rapportée entre les plaques de revêtement et le cadre périphérique.

Les systèmes de panneaux décrits précédemment ont pour inconvénient majeur le fait que la rigidité du panneau est conférée par un assemblage de nombreuses pièces, ce qui complexifie le montage des murs et accroît les coûts.

De plus, dans le cas du système de panneau de la demande de brevet EP1602789 A1, l'assemblage des différentes couches après leur réalisation séparée ne permet pas de garantir une isolation fiable, puisque des fuites peuvent subsister entre les différents éléments assemblés. En outre, le montage sur d'autres matériaux génère des ponts thermiques.

L'invention a pour but de remédier à tout ou partie des inconvénients précités.

L'invention a pour objet un procédé de fabrication d'une paroi composite pour habitation comprenant les étapes suivantes :
- une étape de positionnement d'au moins deux panneaux de parement sensiblement parallèlement l'un à l'autre, de sorte qu'un espace soit créé entre lesdits au moins deux panneaux de parement,
- une étape de surmoulage sous presse d'un noyau de liaison en polyuréthane polymérisé conçu pour rigidifier la paroi composite et lier les panneaux de parement entre eux, ledit noyau de liaison étant surmoulé dans l'espace créé par les deux panneaux de parement.

Ce procédé de fabrication permet, grâce au surmoulage, de réduire le nombre de composants tout en garantissant une isolation maximale. En effet, le surmoulage du noyau de liaison permet d'assurer la tenue mécanique de la paroi composite et garantit une précision géométrique répétitive inhérente à la précision du moule.

En outre, l'utilisation du polyuréthane confère des propriétés très avantageuses et notamment en termes de rigidité, de résistance mécanique et d'isolation thermique. Le noyau de liaison ainsi formé est rigide et assure une isolation qualitative pour une basse consommation énergétique.

On entend par « noyau de liaison rigide » un noyau de liaison qui constitue la partie structurante et portante de la paroi composite.

Préférentiellement, le noyau est réalisé en polyuréthane ignifugé. De préférence, le polyuréthane est polymérisé à haute densité. On entend par « haute densité », une densité comprise de préférence entre 45 kg/m³ et 55 kg/m³.

Selon une autre caractéristique de l'invention, le procédé comprend une étape supplémentaire réalisée avant l'étape de surmoulage, dans laquelle au moins un insert est disposé dans l'espace créé par les deux panneaux de parement, ledit au moins un insert étant ainsi surmoulé avec lesdits panneaux de parement pour plus d'étanchéité, de tenue mécanique et d'isolation thermique.

Avantageusement, au moins un insert est destiné à créer un passage creux conçu pour accueillir des canalisations et/ou des gaines électriques, les passages permettent de réduire le temps de fabrication. Préférentiellement, l'insert conçu pour accueillir des canalisations et/ou des gaines électriques est une broche métallique ou un tube, conçu pour être retiré après moulage dudit noyau de liaison.

Bien entendu les gaines ou les canalisations peuvent également être directement surmoulées avec le reste des composants de la paroi composite.

Selon une autre caractéristique de l'invention, au moins un insert est conçu pour recevoir une baie, ce qui permet un montage rapide et facile de ladite baie. Préférentiellement, l'insert conçu pour recevoir une baie est un tasseau. On entend par « baie » une ouverture pratiquée dans un mur, pour une arcade, une porte, une fenêtre, ou analogues.

Bien entendu, il est possible, selon l'invention, qu'un insert de chaque type soit prévu dans une même paroi composite, voire même à coté l'un de l'autre dans une même zone.

L'invention a également pour objet une paroi composite pour habitation mise en oeuvre par le procédé de fabrication décrit plus haut, la paroi composite comprenant au moins deux panneaux de parement, disposés sensiblement parallèlement l'un à l'autre, et dont les surfaces disposées en regard sont jointes par un noyau de liaison, ledit noyau de liaison couvrant au moins partiellement les surfaces des panneaux de parement disposées en regard.

Avantageusement, les panneaux de parement sont alors autoportants et participent à la tenue de la paroi composite en flexion et en compression. On entend par « panneaux de parement autoportants » des panneaux de parement sans support et dont les formes assurent la stabilité. Avantageusement, la paroi composite ainsi formée peut être livrée telle quelle sur le lieu de montage de l'habitation.

Selon une caractéristique de l'invention, la paroi composite comprend un unique noyau de liaison qui est configuré pour rigidifier l'ensemble de la paroi composite.

Selon une autre caractéristique de l'invention, au moins un bord d'un panneau de parement est débordant par rapport au noyau de liaison.

Selon une autre caractéristique de l'invention, le noyau de liaison couvre partiellement les surfaces des deux panneaux de parement disposées en regard, de sorte que lesdits panneaux de parement comprennent chacun un bord circonférentiel libre. On entend par « bord circonférentiel » une surface bordant l'ensemble du pourtour d'un panneau de parement.

Selon une autre caractéristique de l'invention, au moins un panneau de parement est réalisé en fibres bois et ciment. Ce matériau a notamment pour avantage d'être résistant à l'humidité, au gel, aux termites et insectes, etc....

Selon une autre caractéristique, au moins un des panneaux de parement présente au moins un perçage traversant configuré pour permettre l'injection d'un matériau de remplissage, le perçage étant ménagé sur un bord circonférentiel du panneau de parement.

L'invention a également pour objet un procédé d'assemblage d'au moins deux parois composites pour former un ensemble.

Selon une autre caractéristique de l'invention, le procédé d'assemblage comprend une étape optionnelle de bridage dans laquelle les deux parois composites sont maintenues sensiblement parallèles l'une par rapport à l'autre par un outillage adapté pour le maintien en tension des deux parois composites.

Selon une autre caractéristique de l'invention, le procédé d'assemblage comprend une étape d'étanchéisation selon laquelle des joints d'étanchéité sont positionnés au niveau d'interstices ménagés entre les parois composites.

Selon une autre caractéristique de l'invention, le procédé d'assemblage comprend une étape de perçage dans laquelle au moins un trou d'injection est percé dans un panneau de parement d'une des parois composites. Préférentiellement, dans l'étape de perçage, au moins deux trous d'injection sont percés à des hauteurs différentes du panneau de parement.

Selon une autre caractéristique de l'invention, le procédé d'assemblage comprend une étape d'injection, réalisée après l'étape de perçage et dans laquelle un matériau de remplissage est injecté dans le trou d'injection jusqu'à ce que ledit matériau de remplissage saille du trou d'injection.

Selon une autre caractéristique, s'il existe plusieurs trous d'injection, alors le matériau de remplissage est injecté tout d'abord par le trou d'injection se trouvant le plus bas. L'opération est répétée autant de fois qu'il y a de trous d'injection. L'injection progressive permet avantageusement d'éviter les trous d'air, de s'affranchir d'un outillage adapté pour maintenir l'ensemble en place lors de l'injection et d'avoir à vue l'état d'avancement de l'injection et de contrôler cette injection plus précisément que si l'injection était continue et réalisée depuis le haut de l'ensemble.

Selon une autre caractéristique de l'invention, une fois tous les niveaux de trous d'injection remplis, une injection de finition est réalisée pour terminer la jonction de l'ensemble.

L'invention a également pour objet un ensemble comprenant au moins deux parois composites selon l'invention, dans lequel lesdites au moins deux parois composites sont reliées entre elles par au moins un bloc de calage, intercalé entre lesdites parois composites et accolé au noyau de liaison de chaque paroi composite.

Avantageusement, le bloc de calage est inséré au niveau d'un bord libre des panneaux de parement assurant ainsi la continuité de matière du noyau de liaison. Préférentiellement, le bloc de calage est de même longueur qu'un noyau de liaison d'une paroi composite. L'insertion d'un bloc de calage, de préférence dans le même matériau que le noyau de liaison, permet une liaison simple et facile des parois qui, par la continuité du matériau, contribue à la rigidité de l'ensemble. La liaison par bloc de calage entre deux parois composites permet d'assurer la continuité de la liaison mécanique par collage ou fluage et d'assurer la continuité d'isolation thermique sans créer de ponts thermiques.

Selon une caractéristique de l'invention, le bloc de calage comprend une première surface de parement, une deuxième surface de parement, la première surface de parement et la deuxième surface de parement étant reliées l'une à l'autre par un noyau en polyuréthane surmoulé, et de préférence par un unique noyau de polyuréthane surmoulé. Ainsi, l'isolation est augmentée et le maintien des parois composite les unes avec les autres est renforcé.

Préférentiellement, le noyau du bloc de calage est réalisé en polyuréthane de haute densité.

Avantageusement, la première surface de parement du bloc de calage et/ou la deuxième surface de parement du bloc de calage sont réalisées en fibres de bois et ciment.

Selon une caractéristique de l'invention, le bloc de calage est réalisé selon le même procédé de fabrication que celui de la paroi composite selon l'invention.

Alternativement, en remplacement du bloc de calage, un matériau de remplissage est injecté entre les deux parois composites. Préférentiellement, le matériau de remplissage est identique ou similaire au matériau utilisé pour réaliser le noyau de liaison. La liaison par matériau de remplissage entre deux parois composites permet d'assurer la continuité de la liaison mécanique, d'assurer la continuité d'isolation thermique sans créer de ponts thermiques et d'uniformiser l'ensemble de parois composites.

Selon l'invention, les panneaux de parement de chacune des parois composites sont espacés par un interstice quand lesdites parois sont reliées entre elles. Avantageusement, les interstices sont comblés par des joints d'étanchéité qui présentent, de préférence, une section transversale constante en H. Préférentiellement, les joints d'étanchéité sont en PVC (Polychlorure de vinyle).

Selon une autre caractéristique de l'invention, l'ensemble comprend au moins deux parois composites, à savoir une première paroi composite selon l'invention dans laquelle est ménagé au moins un trou d'injection et une paroi composite selon l'invention, la première paroi composite et la deuxième paroi composite étant jointes ensemble par un matériau de remplissage injecté via le au moins un trou d'injection ménagé dans la première paroi composite.

L'utilisation d'un bloc de calage d'une part, et les interstices créés entre les panneaux de parement de chaque paroi composite assemblée d'autre part, permettent d'éviter les ponts thermiques qui pourraient compromettre l'efficacité d'isolation des parois composites.

L'invention sera mieux comprise, grâce à la description ci-après, qui se rapporte à des modes de réalisation et des variantes de réalisation selon la présente invention, donnés à titre d'exemples non limitatifs et expliqués avec référence aux dessins schématiques annexés, dans lesquels:
- la figure 1 représente une vue partielle en perspective d'une paroi composite selon l'invention,
- la figure 2 représente une vue partielle en perspective d'un ensemble selon un premier mode d'assemblage de l'invention,
- la figure 3 est une vue partielle de dessus de l'ensemble représenté en figure 2,
- la figure 4 représente une vue partielle en perspective d'une paroi composite présentée dans une variante de réalisation selon l'invention,
- la figure 5 représente une vue partielle en perspective d'une paroi composite présentée dans une autre variante de réalisation selon l'invention, et,
- la figure 6 représente une vue partielle de dessus d'un ensemble selon une variante du premier mode d'assemblage représentée aux figures 2 et 3,
- la figure 7A représente une vue en perspective d'un deuxième mode de réalisation de l'ensemble selon la présente invention, et,
- la figure 7B représente une vue de dessus du mode d'assemblage représenté en figure 7A, et,
- les figures 8A et 8B représentent une variante de réalisation du bloc de calage pour l'assemblage de paroi composite selon l'invention.

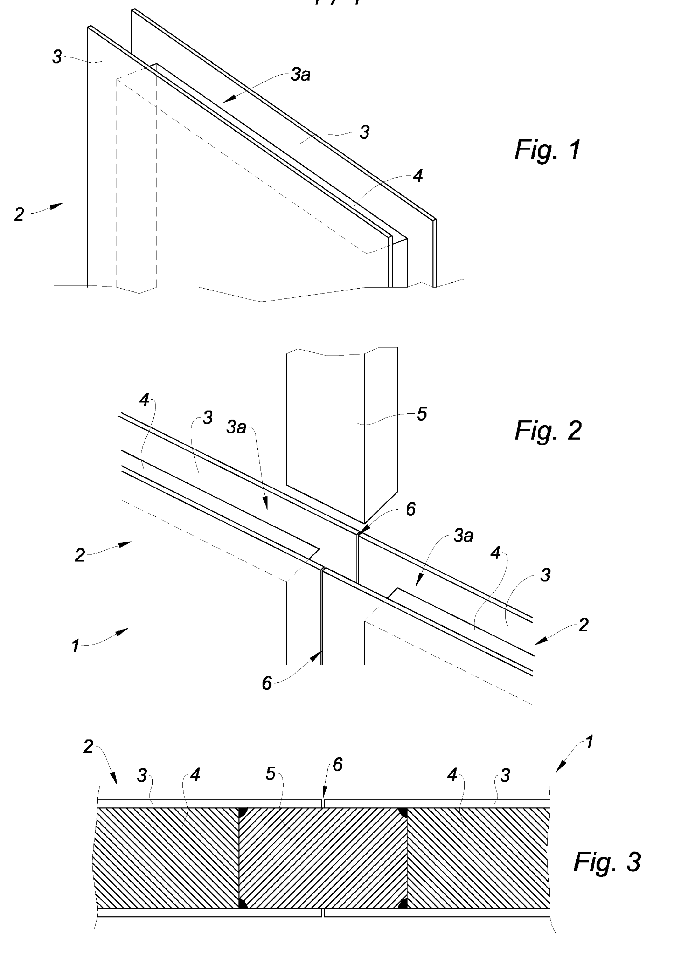

L'invention concerne un procédé de fabrication d'une paroi composite pour habitation, ladite paroi composite 2 étant illustrée notamment en figure 1.

Le procédé selon l'invention comprend une étape de positionnement de deux panneaux de parement 3 sensiblement en parallèle l'un de l'autre, les deux panneaux de parement 3 étant espacés l'un par rapport à l'autre définissant un espace. Dans l'espace créé entre ces deux panneaux de parement 3, un noyau de liaison 4 en polyuréthane est ensuite injecté sous presse, dans une étape de surmoulage. L'injection sous presse sans bridage est réalisée en usine dès la fabrication des panneaux de parement 3.

Les deux panneaux de parement 3 et le noyau de liaison 4 forment une paroi composite 2 d'un seul tenant comme illustré aux figures 1 à 8B.

Avantageusement, au moins un des panneaux de parement 3 est réalisé en fibre bois et ciment et de préférence du type Duripanel^{®} ou tout autre produit analogue.

De plus, dans l'exemple illustré aux figures 1 à 8B, le polyuréthane utilisé pour la formation du noyau de liaison 4 est de préférence une mousse polyuréthane haute densité, dont la densité est sensiblement égale à 50kg/m³.

De préférence, le polyuréthane utilisé pour la formation du noyau de liaison 4 est du type Mondur^{®} ou Multranol^{®} ou tout autre produit analogue.

En figures 1 et 7A à 8B, le noyau de liaison 4 couvre partiellement les surfaces des panneaux de parement 3 qui sont en regard l'une de l'autre, de sorte que les panneaux de parement 3 présentent un bord 3a circonférentiel libre. Bien entendu, il est tout à fait possible que seulement un, deux ou trois bords 3a des panneaux de parement 3 débordent par rapport au noyau de liaison 4.

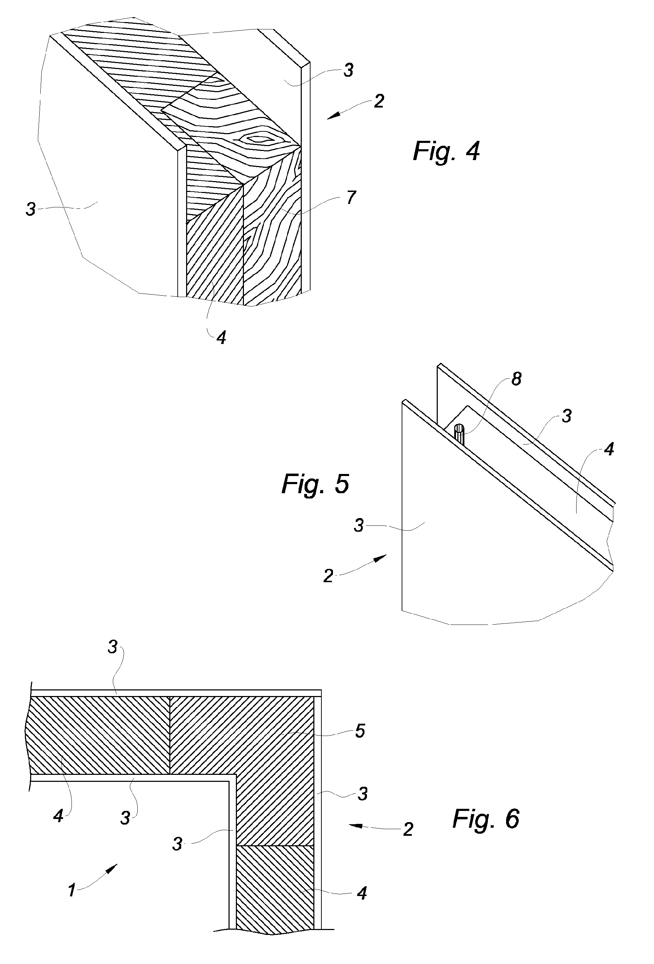

Les figures 4 et 5 représentent deux variantes de réalisation, dans lesquelles un insert 7, 8 est surmoulé avec le noyau de liaison 4.

Plus particulièrement, dans une étape supplémentaire du procédé de fabrication de la paroi composite 2, il est possible de positionner un insert 7, 8 entre les deux panneaux de parement 3 disposés parallèlement l'un à l'autre, avant le surmoulage du noyau de liaison 4. Suite au positionnement, l'insert 7, 8 est surmoulé avec le noyau de liaison 4, de sorte que l'insert 7, 8 est noyé dans la masse du noyau de liaison 4 pour préserver la bonne isolation de la paroi composite 2.

L'insert 7 peut être du type tasseau de bois, comme illustré en figure 4, permettant la fixation d'une baie (non représentée) par emboîtement et solidarisation mécanique.

L'insert 8 peut être conçu pour permettre le passage de gaines électriques ou canalisations, et comprend une broche métallique ou un tube, extrait après moulage du noyau de liaison 4, définissant une cavité dans laquelle peuvent être insérées des gaines électriques ou des canalisations après surmoulage de l'insert 8, comme visible en figure 5. L'insert 8 peut également être une gaine électrique ou une canalisation directement surmoulée dans la masse du noyau de liaison 4.

Une fois les parois composites 2 fabriquées, ces dernières sont assemblées formant un ensemble 1 aboutissant à terme, à la construction d'une habitation ou plus généralement d'un bâtiment.

L'assemblage de deux parois composites 2 formant un ensemble 1 est représenté aux figures 2, 3 et 6 à 8B.

Un ensemble 1, selon l'invention, comprend au moins deux parois composites 2. Les parois composites 2 sont jointes par un bloc de calage 5 qui est introduit entre lesdites parois composites 2 ou par un matériau de remplissage 22 injecté entre lesdites parois composites 2.

Comme illustré en figure 2, selon un premier mode d'assemblage, les parois composites 2 sont rapprochées l'une de l'autre et un bloc de calage 5 est inséré au niveau de deux bords 3a libres adjacents, chacun étant issu d'une paroi composite 2. Avantageusement, le bloc de calage 5 est conformé pour lier les deux parois sans jeu. De préférence, le bloc de calage 5 est de même longueur que les noyaux de liaison 4 des parois composites 2.

Une fois inséré entre les deux parois composites 2, le bloc de calage 5 est positionné au niveau des noyaux de liaison 4 de chaque paroi composite 2, le bloc de calage 5 assure ainsi la tenue mécanique de l'ensemble 1 et assure également la continuité de l'isolation thermique au sein de l'ensemble 1.

Avantageusement, le bloc de calage 5 est collé, et préférentiellement au niveau des arêtes du bloc de calage 5, comme représenté en figure 3. Le collage permet de fixer le bloc de calage 5 et contribue à la solidarisation de l'ensemble 1.

Alternativement, le bloc de calage 5 peut être vissé.

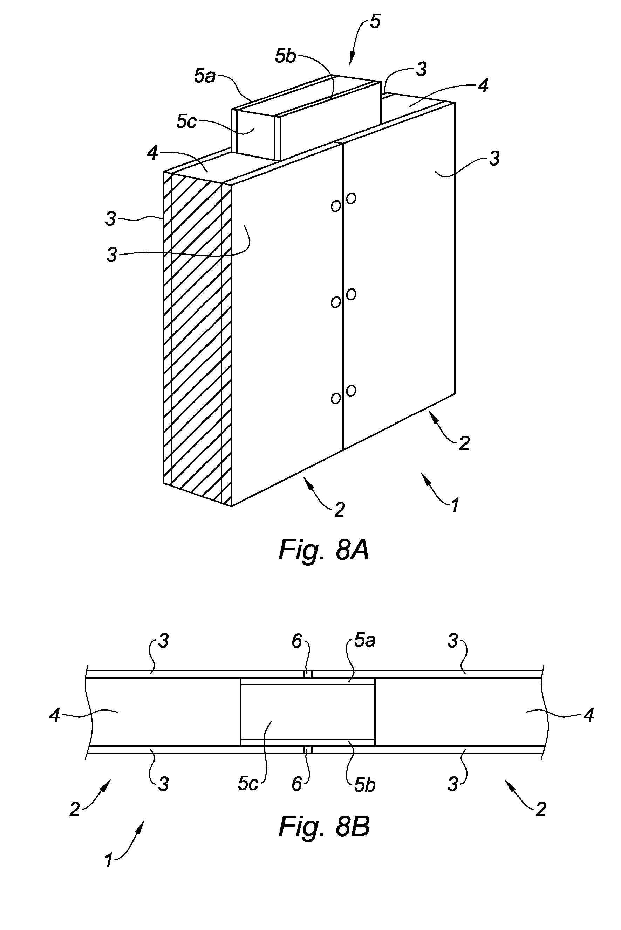

Dans l'exemple illustré aux figures 8A et 8B, le bloc de calage 5 comprend une première surface de parement 5a, une deuxième surface de parement 5b, la première surface de parement 5a et la deuxième surface de parement 5b étant reliées l'une à l'autre par un noyau 5c en polyuréthane surmoulé.

Avantageusement, la première surface de parement 5a et/ou la deuxième surface de parement 5b sont réalisées dans le même matériau que les panneaux de parement 3 de la paroi composite 2.

Selon l'invention, le bloc de calage 5 peut être réalisé selon le même procédé de fabrication que la paroi composite 2.

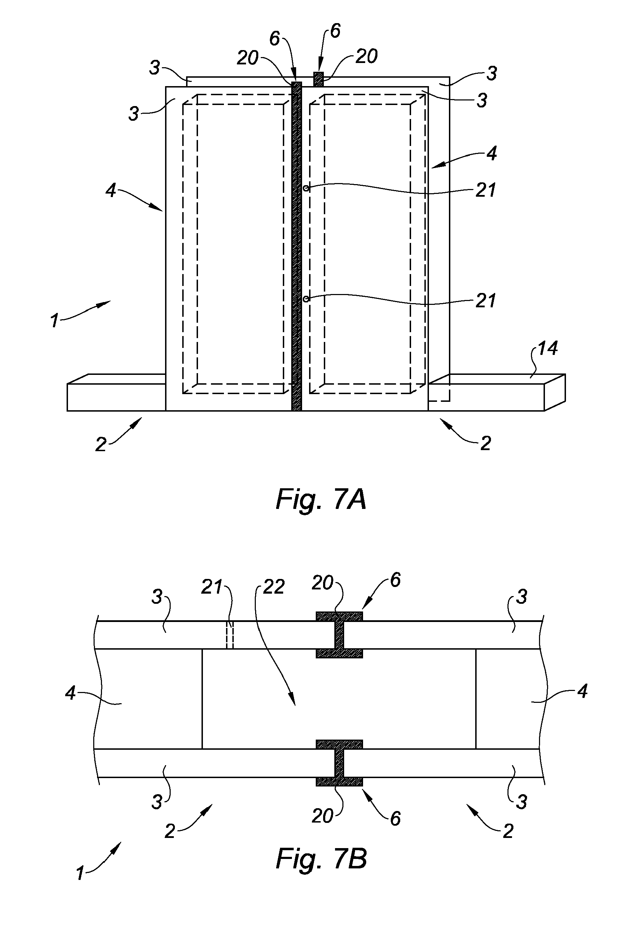

En outre, l'interstice 6 entre les panneaux de parement 3 de chaque paroi composite 2 de l'ensemble 1, peuvent être comblés par exemple par un joint d'étanchéité, comme illustré en figure 7A.

La fixation du bloc de calage 5 sur les parois composites 2 est représentée en figure 8A, par des orifices (non référencés) représentant le passage de vis ou analogues.

Comme illustré aux figures 2, 3, 7A à 8B, les panneaux de parement 3 de chaque paroi composite 2 sont espacés par un interstice 6 permettant d'éviter les ponts thermiques. Les interstices 6 peuvent être comblés par un joint d'étanchéité 20.

La figure 6 représente l'ensemble 1 selon une variante du premier mode d'assemblage représenté en figure 2 et 3. Dans cette configuration, les panneaux de parement 3 d'une même paroi composite 2 n'ont pas la même dimension et débordent donc du noyau de liaison 4 de manière différente : un des panneaux de parement 3 dépasse plus que l'autre afin de pouvoir former un angle avec une autre paroi composite 2.

Les parois composites 2 sont rapprochées et positionnées sensiblement perpendiculairement l'une par rapport à l'autre, les extrémités des panneaux de parement 3 de chaque paroi composite 2 étant mises sensiblement en contact les unes avec les autres en préservant un très faible interstice (non représenté).

Une fois les parois composites 2 positionnées, un bloc de calage 5 conformé pour combler entièrement l'espace entre les deux parois composites 2, est inséré puis collé, comme on peut le voir en figure 6. Le collage du bloc de calage 5 permet de rigidifier l'angle formé par les parois composites 2.

Dans les exemples illustrés aux figures 2, 3 et 6, 8A, 8B, le bloc de calage 5 est un élément rapporté préformé qui vient s'insérer dans un espace créé entre les parois composite 2, tandis que dans les exemples illustrés aux figures 7A et 7B, l'espace créé entre les parois composite 2, est comblé par un matériau de remplissage 22 injecté, assurant la cohésion de l'ensemble 1.

Selon l'invention, lorsqu'on assemble deux panneaux de parement 3 ensemble pour former une paroi composite 2, on peut prévoir, avant l'injection sous presse du noyau de liaison 4, de placer au moins un té de réservation 10. Ce té de réservation 10 est positionné entre les panneaux de parement 3. Le té 10 est un té de réservation de joint d'étanchéité permettant de réserver l'espace nécessaire à l'insertion post-injection des joints d'étanchéité 20 (visibles en figures 8A et 8B).

Les figures 7A et 7B représentent un troisième mode d'assemblage de l'ensemble 1 selon l'invention. Les panneaux de parement 3 sont placés en regard l'un de l'autre et espacés à leur base par un chainage bas 14, le chainage bas 14 permettant de maintenir l'écartement de ces panneaux de parement 3.

Dans ce deuxième mode d'assemblage, des joints d'étanchéité 20 en forme de H et de section transversale constante sont insérés au niveau des deux interstices 6 formés par le rapprochement des parois composites 2.

Puis, deux trous d'injection 21 sont percés à travers un des panneaux de parement 3 d'une des parois composite 2 de l'ensemble 1 et débouchant entre les parois composites 2. Ces trous d'injection 21 permettent d'injecter au fur et à mesure un matériau de remplissage dans l'espace créé entre les parois composites 2.

L'injection progressive permet avantageusement d'éviter les trous d'air et de s'affranchir d'un outillage spécifique et adapté. On passe au trou d'injection 21 suivant lorsque le matériau de remplissage 22 apparaît par expansion au niveau du premier trou d'injection 21. Une fois l'injection terminée, le matériau de remplissage 22 uniformise l'espace entre les deux parois composites 2.

Dans une étape de finition, on enlève l'excédent de matériau de remplissage 22 après la polymérisation de ce dernier.

Bien entendu, l'ensemble 1 peut comprendre plus de deux parois composite 2 assemblées selon un ou plusieurs des modes d'assemblage.

Selon l'invention et quel que soit le mode d'assemblage représenté en figures 2, 3 et 6, 8A, 8B, le bloc de calage 5 peut prendre n'importe quelle forme. Ledit bloc de calage 5 est conformé pour remplir l'espace entre les deux parois composites 2 quel que soit l'angle formé par ces dernières, de sorte qu'il n'y ait pas de discontinuité de matière au niveau des noyaux de liaison 4de chaque paroi composite 2. Bien entendu il en va de même pour le matériau de remplissage 22

L'invention n'est pas limitée au mode de réalisation et aux variantes de réalisation décrits et représentés aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de fabrication d'une paroi composite (2) pour habitation **caractérisé en ce qu'**il comprend les étapes suivantes :
- une étape de positionnement d'au moins deux panneaux de parement (3) sensiblement parallèlement l'un à l'autre, de sorte qu'un espace soit créé entre lesdits au moins deux panneaux de parement (3),
- une étape de surmoulage sous presse d'un noyau de liaison (4) en polyuréthane polymérisé conçu pour rigidifier la paroi composite (2) et lier les panneaux de parement (3) entre eux, ledit noyau de liaison (4) étant surmoulé dans l'espace créé par les deux panneaux de parement (3).

2. Procédé de fabrication selon la revendication 1, dans lequel une étape supplémentaire est réalisée avant l'étape de surmoulage, dans laquelle au moins un insert (7, 8) est disposé dans l'espace créé par les deux panneaux de parement (3), ledit au moins un insert (7, 8) étant ainsi surmoulé avec lesdits panneaux de parement (3).

3. Procédé de fabrication selon la revendication 2, dans lequel au moins un insert (8) est destiné à créer un passage creux conçu pour accueillir des canalisations et/ou des gaines électriques.

4. Procédé de fabrication selon l'une quelconque des revendications 2 ou 3, dans lequel au moins un insert (7) est conçu pour recevoir une baie.

5. Paroi composite (2) pour habitation mise en oeuvre par le procédé de fabrication selon l'une quelconque des revendications 1 à 4, **caractérisée en ce que** la paroi composite (2) comprend au moins deux panneaux de parement (3), disposés sensiblement parallèlement l'un à l'autre, et dont les surfaces disposées en regard sont jointes par un noyau de liaison (4) en polyuréthane polymérisé conçu pour rigidifier la paroi composite (2), ledit noyau de liaison (4) couvrant au moins partiellement les surfaces des panneaux de parement (3) disposées en regard.

6. Paroi composite selon la revendication 5, dans laquelle au moins un bord (3a) d'un panneau de parement (3) est débordant par rapport au noyau de liaison (4).

7. Paroi composite selon l'une quelconque des revendications 5 ou 6, dans laquelle le noyau de liaison (4) couvre partiellement les surfaces des deux panneaux de parement (3) disposées en regard, de sorte que les panneaux de parement (3) comprennent chacun un bord (3a) circonférentiel libre.

8. Paroi composite selon l'une quelconque des revendications 5 à 7, dans laquelle au moins un panneau de parement (3) est réalisé en fibres bois-ciment.

9. Paroi composite selon l'une quelconque des revendications 6 ou 7, dans laquelle au moins un des panneaux de parement (3) de ladite paroi composite (2) présente au moins un trou d'injection (21) configuré pour permettre l'injection d'un matériau de remplissage, le trou d'injection étant ménagé sur le bord (3a) du panneau de parement (3).

10. Ensemble (1) comprenant au moins deux parois composites (2) selon l'une quelconque des revendications 5 à 8, **caractérisé en ce que** lesdites au moins deux parois composites (2) sont reliées entre elles par au moins un bloc de calage (5), intercalé entre lesdites parois composites (2) et accolé au noyau de liaison (4) de chaque paroi composite (2).

11. Ensemble (1) selon la revendication 10, **caractérisé en ce que** le bloc de calage (5) comprend une première surface de parement (5a), une deuxième surface de parement (5b), la première surface de parement (5a) et la deuxième surface de parement (5b) étant reliées l'une à l'autre par un noyau (5c) en polyuréthane surmoulé.

12. Ensemble (1), comprenant au moins deux parois composites (2), à savoir une première paroi composite (2) selon la revendication 9 et une paroi composite (2) selon l'une quelconque des revendications 5 à 8, **caractérisé en ce que** la première paroi composite (2) et la deuxième paroi composite (2) sont jointes ensemble par un matériau de remplissage (22) injecté via le au moins un trou d'injection (21) ménagé dans la première paroi composite (2).
